# EUROPEAN PATENT APPLICATION

(11) **EP 4 191 540 A1**
(43) Date of publication of application: **07.06.2023**
(21) Application number: 20946641.6
(22) Date of filing: 27.07.2020
(51) Int. Cl.: G06T 19/00

(54) **3D DATA SYSTEM AND 3D DATA GENERATION METHOD**

(71) Applicant: VRC Inc., Hachioji-shi, Tokyo 192-0046 (JP)
(72) Inventor: XIE, Yingdi, Hachioji-shi, Tokyo 192-0046 (JP); ZHANG, Yanpeng, Hachioji-shi, Tokyo 192-0046 (JP)
(74) Representative: Haseltine Lake Kempner LLP
(86) International application number: PCT/JP2020/028760
(87) International publication number: WO 2022/024200

(57) **Abstract**

A 3D data system includes an accessing means for accessing a machine-learning model that learns by using training data, the training data including, for each of a plurality of clothing, (a) image data and distance data for an input layer and (b) 3D modeling data, bone data, and a skin weight of the clothing for an output layer, the image data and distance data being obtained by scanning a plurality of clothing; an obtaining means for obtaining 3D modeling data, bone data, and a skin weight of a target clothing, by inputting image data and distance data of the target clothing into the machine-learning model; and a storage means for storing the 3D modeling data, the bone data, and the skin weight of the target clothing.

## Description

### TECHNICAL FIELD

The present disclosure relates to technique for generating 3D modelling data of clothing.

### RELATE ART

Known in the art are techniques for utilizing 3D modelling data of clothing. For example, Patent Document 1 discloses applying a 3D clothing model to a 3D human model.

### PRIOR ART

### PATENT DOCUMENT

Patent Document 1: JP 2017-37637A

### SUMMARY

### PROBLEM TO BE SOLVED

To move 3D modeling data of clothing, it is not sufficient to simply measure an appearance and 3D shape, and data for imparting movement to 3D modeling data is required. This disclosure provides a technique for obtaining data for imparting movement to 3D modelling data.

### SOLUTION

According to one aspect of the disclosure, there is provided a 3D data system including: an accessing means for accessing a machine-learning model that learns by using training data, the training data including, for each of a plurality of clothing, (a) image data and distance data for an input layer and (b) 3D modeling data, bone data, and a skin weight of the clothing for an output layer, the image data and distance data being obtained by scanning the plurality of clothing; an obtaining means for obtaining 3D modeling data, bone data, and a skin weight of a target clothing, by inputting image data and distance data of the target clothing into the machine-learning model; and a storage means for storing the 3D modeling data, the bone data, and the skin weight of the target clothing.

According to another aspect of the disclosure, there is provided a 3D data system including: an accessing means for accessing a machine-learning model that learns by using training data, the training data including, for each of a plurality of clothing, (a) image data and distance data for an input layer and (b) pattern-paper data of the clothing for an output layer, the image data and distance data being obtained by scanning a plurality of clothing, the pattern-paper data being used for manufacturing a target clothing; a first obtaining means for obtaining pattern-paper data of the target clothing by inputting image data and distance data of the target clothing into the machine-learning model; a second obtaining means for obtaining 3D modeling data, bone data, and a skin weight of the target clothing from a 3D model generating system that outputs 3D modeling data, bone data, and a skin weight of a clothing from image data and distance data of the clothing; and a storage means for storing the 3D modeling data, the bone data, and the skin weight of the target clothing.

The 3D data system may further include: a third obtaining means for obtaining 3D modelling data of a user; and a synthesizing means for synthesizing a 3D model showing a 3D model of the user wearing the target clothing.

According to yet another aspect of the disclosure, there is provided a 3D data generating method including: accessing a machine-learning model that learns by using training data, the training data including, for each of a plurality of clothing, (a) image data and distance data for an input layer and (b) 3D modeling data, bone data, and a skin weight of the clothing for an output layer, the image data and distance data being obtained by scanning a plurality of clothing; obtaining 3D modeling data, bone data, and a skin weight of a target clothing, by inputting image data and distance data of the target clothing into the machine-learning model; and storing the 3D modeling data, the bone data, and the skin weight of the target clothing.

According to yet another aspect of the disclosure, there is provided a 3D data generating method including: accessing a machine-learning model that learns by using training data, the training data including, for each of a plurality of clothing, (a) image data and distance data for an input layer and (b) pattern-paper data of the clothing for an output layer, the image data and distance data being obtained by scanning a plurality of clothing, the pattern-paper data being used for manufacturing the target clothing; obtaining pattern-paper data of a target clothing by inputting image data and distance data of the target clothing into the machine-learning model; obtaining 3D modeling data, bone data, and a skin weight of a target clothing from a 3D model generating system that outputs 3D modeling data, bone data, and a skin weight of a clothing from image data and distance data of the clothing; and storing the 3D modeling data, the bone data, and the skin weight of the target clothing.

### ADVANTAGOUS EFFECTS

According to the present disclosure, data for imparting motion to 3D modeling data can be easily obtained.

### BRIEF DESCRIPTION OF THE DRAWINGS

FIG. 1 shows an exemplary 3D data system 1 according to an embodiment of the present invention.
FIG. 2 shows an exemplary functional configuration of 3D data system 1.
FIG. 3 shows an exemplary hardware configuration of 3D scanner 40.
FIG. 4 shows an exemplary hardware configuration of server 10.
FIG. 5 shows an exemplary flowchart of a process related to learning.
FIG. 6 shows an exemplary sequence chart of a process related to data generation.
FIG. 7 shows an exemplary functional configuration of 3D data system 2 according to the second embodiment.
FIG. 8 shows an exemplary sequence chart illustrating another process related to data generation.

### DESCRIPTION OF REFERENCE NUMERALS

1...3D data system, 2...3D data system, 3D...type data, 10...server, 11...storage means, 12...learning means, 20...server, 30...terminal device, 31...output means, 32...control means, 33...obtaining means, 41...scanning means, 42...accessing means, 44...storage means, 45...communication means, 46...obtaining means, 47...output means, 101...CPU, 102...memory, 103... storage, 104...Communication IF, 11... database, 12... machine-learning model, 13...training data, 213...training data, 402...memory, 404...communication IF, 405...display, 406...input device, 410...housing, 420...camera, 430...distance sensor, 440...computers, 441...CPU

### DETAILED DESCRIPTION

### 1. Overview

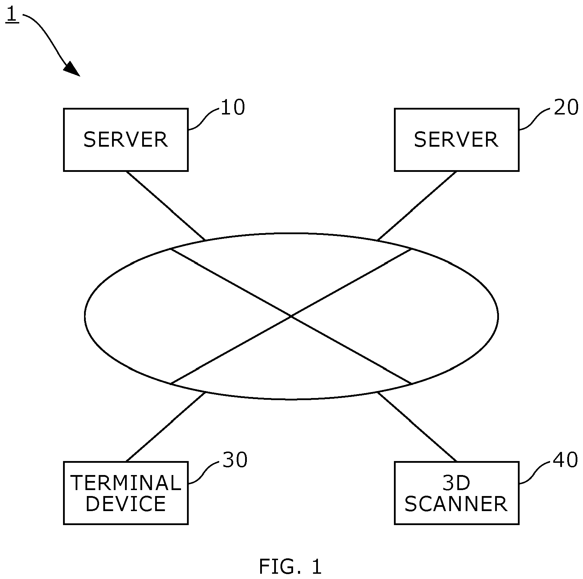

FIG. 1 shows an outline of a 3D data system 1 according to an embodiment. 3D data system 1 scans clothing and generates 3D modelling data. In particular, in this embodiment, bone data and a skin weight of the clothing are generated using the machine- learning model.

3D data system 1 includes server 10, server 20, terminal device 30, and 3D scanner 40. 3D scanner 40 is a device used for scanning an object and generating 3D modelling data that represents a 3D model of the object. In this embodiment, the object is clothing. "Scanning an object" means capturing an appearance of an object from a plurality of directions, measuring a distance from a reference position (for example, a position of a depth sensor) to a surface of the object at a plurality of points, and associating a point on an image obtained by capturing the appearance with distance data (or depth information). That is, scanning an object refers to capturing an image together with distance data. The 3D model is a virtual object that represents an object in a virtual space. The 3D modelling data is data that represents a 3D model.

Server 10 is a server that manages 3D modeling data. Server 10 is managed by an administrator of 3D data system 1. Server 20 is a server that provides an application that uses 3D modeling. This application may be provided either by a business entity that is the administrator of 3D data system 1, or by another business entity. Terminal device 30 is a user terminal that utilizes an application (i.e., utilizes 3D modeling). Terminal device 30 is an information processing device such as a smart phone, a tablet terminal, or a personal computer. It is of note here that for simplicity of description only one server 20, one terminal device 30, and one 3D scanner 40 are illustrated in the drawings. However, 3D data system 1 may include a plurality of servers 20 and/or and a plurality of terminal devices 30. 3D scanner 40 is a device that scans an object to generate 3D modelling data. 3D scanner 40 uploads the generated 3D modeling data to server 10.

### 2. First Embodiment

### 2-1. Configuration

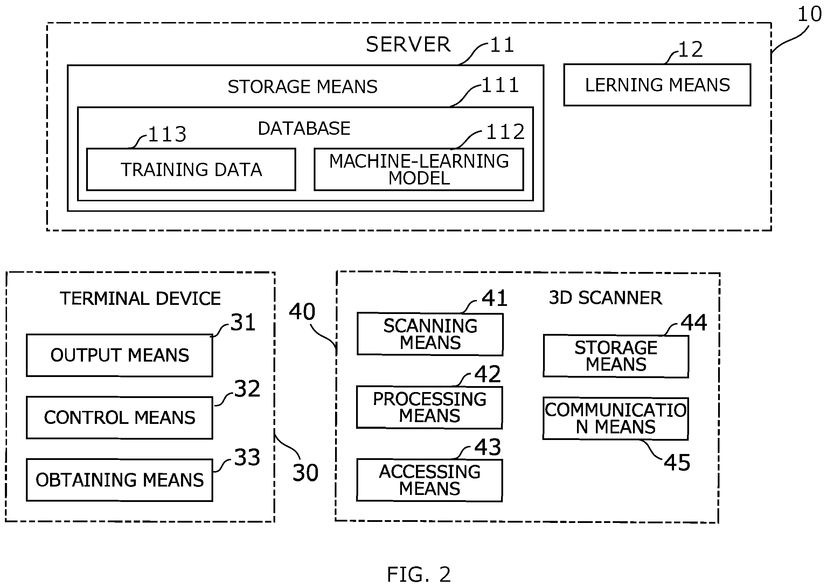

FIG. 2 shows an exemplary functional configuration of 3D data system 1. 3D data system 1 includes storage means 11, learning means 12, scanning means 41, processing means 42, accessing means 43, storage means 44, communication means 45, output means 31, control means 32, and obtaining means 33. Storage means 11 stores various data. The data stored in storage means 11 includes database 111, machine-learning model 112, and training data 113. Database 111 is a database that stores 3D data sets for a plurality of objects (in this instance, clothing). The 3D data sets include 3D modelling data and appendix data for each of the plural objects. The appendix data includes, for example, an object attribute and an update date. The object attribute indicates an attribute of the clothing, such as a clothing ID, a clothing name, a brand, release date, sex, and size. An update date indicates a date and time that 3D data set was updated.

Machine-learning model 112 is a model used for machine-learning. Machine-learning model 112 includes an input layer, an intermediate layer, and an output layer. At a first point in time, machine-learning model 112 is a model that has yet learned (i.e., non-learned). Training data 113 includes, for each of the plurality of clothing, images of the clothing, 3D modeling data of the clothing, the bone data, and the skin weight. The images are captured by 3D scanner 40, and 3D modelling data is generated by 3D scanner 40. Bones indicate elements that are units of movement for moving 3D models. For example, when 3D models are represented by polygons, correspondences (skin weights) between the vertices of the polygons and the bones are set (this process is referred to as skinning). As the bones move, the corresponding polygons follow the movement of the bones, thereby a whole 3D model moves. The bone data and the skin weights are, in one example, manually generated by an operator, who is not a general user, but is a trained professional.

Learning means 12 causes machine-learning model 112 to perform learning by using training data 113. Training data 113 may be added or updated at a predetermined timing, and machine-learning model 112 may be added or learned again using the added or updated training data 113.

Scanning means 41 scans an object. Processing means 42 processes image data together with distance data obtained by scanning an object. Accessing means 43 accesses machine-learning model 112. Obtaining means 46 inputs an image obtained by photographing the clothing to be processed (hereinafter referred to as "target clothing") into machine-learning model 112, and obtains 3D modeling data, the bone data, and the skin weight of the target clothing. Storage means 44 stores various program and data. Communication means 45 communicates with another device such as server 10 or terminal device 30. Output means 31 outputs images corresponding to 3D modeling data, the bone data, and the skin weight of the target clothing.

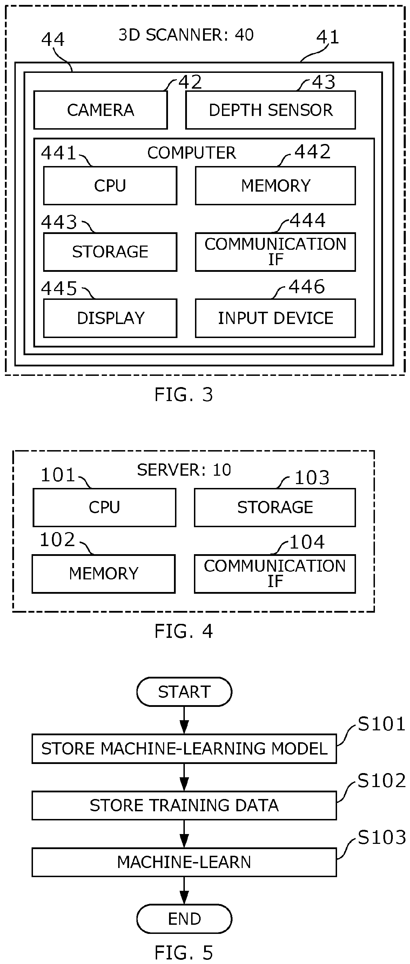

FIG. 3 shows an exemplary hardware configuration of 3D scanner 40. 3D scanner 40 includes housing 410, camera 420, distance sensor (or depth sensor) 43, and computer 440. Camera 420 captures an appearance of an object and outputs image data. Distance sensor 430 measures the distance from the reference position (the position of the sensor) to a plurality of points on the surface of the object. A positional relationship between a part measured by distance sensor 430 and a part captured by camera 420 is defined in advance. 3D scanner 40 may include a plurality of cameras 420 and a plurality of distance sensors 430. Housing 410 supports both camera 420 and distance sensor 430. Housing 410 may have a mechanism for rotating the object and camera 420 and distance sensor 430 relative to each other depending on a number and arrangement of camera 420 and distance sensor 430.

Computer 440 processes the image data output from camera 420 and the distance data output from distance sensor 430. The processing may include mapping the distance data onto the image. Further, the processing may include applying the image data and the range data to a predetermined algorithm to generate 3D modelling data.

Computer 440 includes CPU (Central Processing Unit) 401, memory 402, storage 403, communication IF 404, display 405, and input device 406. CPU 401 is a processor that performs various operations in accordance with a program. Memory 402 is a main storage device that functions as a work area when CPU 401 executes a process. Memory 402 includes, for example, a RAM (Random Access Memory) and a ROM (Read Only Memory). Storage 403 is an auxiliary storage device for storing various data. Storage 403 includes, for example, an SSD and/or an HDD. Communication IF 404 is a device that communicates with other devices in accordance with a predetermined communication standard (e.g., Ethernet), and includes, for example, an NIC (Network Interface Card). Display 405 is a device for outputting visual information, and includes, for example, an LCD (Liquid Crystal Display). Input device 406 is a device that inputs an instruction or information to computer 440 in response to an operation of a user, and includes, for example, at least one of a touch screen, a keyboard, a keypad, a mouse, and a microphone.

In this embodiment, the program stored in storage 403 includes a program (hereinafter referred to as a "3D model generation program") that causes the computer device to function as computer 440 in 3D data system 1. When CPU 401 executes a 3D model generating program, the function of FIG. 2 is implemented in the computer device. Camera 420, distance sensor 430, and CPU 401 are exemplary scanning means 41 while CPU 401 is executing 3D model generation program. CPU 401 is an exemplary processing means 42, accessing means 43, and obtaining means 46. At least one of storage 403 and memory 402 is an example of storage means 44. Communication IF 404 is an example of communication means 45.

FIG. 4 shows an exemplary hardware configuration of server 10. Server 10 is a computer device having CPU 101, a memory 102, storage 103, and communication IF 404. CPU 101 is a processor that performs various operations in accordance with a program. Memory 102 is a main storage device that functions as a work area when CPU 101 executes a process. Memory 102 includes, for example, a RAM and a ROM. Storage 103 is a device for storing various data and programs. Storage 103 includes, for example, an SSD and/or a HDD. Communication IF 104 is a device that communicates with other devices in accordance with a predetermined communication standard (e.g., Ethernet), and includes, for example, an NIC.

In this embodiment, the program stored in storage 103 includes a program (hereinafter referred to as a "server program") that causes the computer device to function as server 10 in 3D data system 1. When CPU101 executes the server program, the functions shown in FIG. 2 are implemented in the computer. When CPU101 is executing the server program, at least one of storage 103 and memory 102 is an example of storage means 11. CPU101 is an example of learning means 12.

Although detailed description is omitted, server 20 and terminal device 30 each have a hardware configuration as a computer device. The display included in terminal device 30 is an example of output means 31. The CPU included in terminal device 30 is an exemplary obtaining means 33.

### 2-2. Operation

Hereinafter, operation of 3D data system 1 will be described. The operation of 3D data system 1 is generally divided into training and data generation. Learning here is a process of causing machine-learning model 112 to perform learning. Data generation here is a process of generating 3D modeling data using machine-learning model 112.

### 2-2-1. Learning

FIG. 5 shows an exemplary flowchart of a process related to learning. The flow in FIG. 5 is started, for example, when a predetermined start condition is satisfied. The start condition is, for example, a condition that new data is added to training data 113.

At step S101, storage means 11 stores the machine-learning model 112. In the first state, machine-learning model 112 is a model that has not yet learned. At step S102, storage means 11 stores training data 113.

At step S103, learning means 12 provides machine-learning model 112 with training data 113 and causes machine-learning model 112 to learn. Specifically, learning means 12 provides an image obtained by photographing clothing to the input layer of machine-learning model 112, and provides 3D modeling data, bone data, and skin weight of the clothing to the output layer as training data.

When the predetermined end condition is satisfied, learning means 12 ends the learning. Upon completion of the learning, machine-learning model 112 is a learned model. Here, an example in which machine-learning model 112 learns by using training data 113 has been described, but the same procedure applies to a case in which machine- learning model 212 learns by using training data 213.

### 2-2-2. Data generation

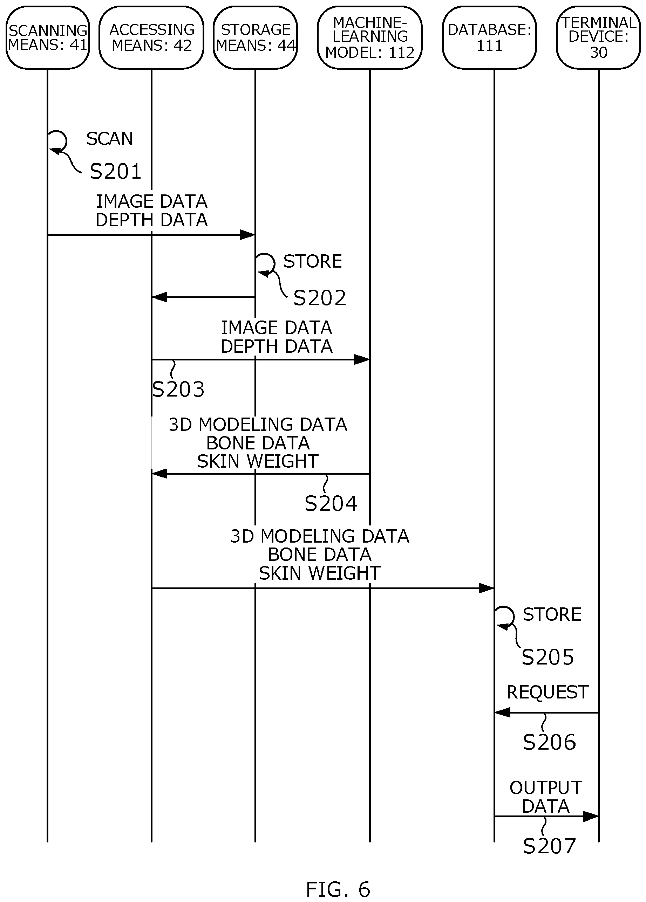

FIG. 6 shows an exemplary sequence chart illustrating processing related to data generation. The process in FIG. 6 is started, for example, when a predetermined start condition is satisfied. This start condition is, for example, an instruction from the user for generation of 3D modeling data in 3D scanner 40.

At step S201 scanning means 41 scans an object, i.e., clothing. Storage means 44 stores (at step S202) the image data and the distance data obtained by scanning means 41. At step S203, accessing means 43 accesses machine-learning model 112. Specifically, accessing means 43 inputs image data and distance data obtained by scanning means 41 to machine-learning model 112. Machine-learning model 112 outputs (at step S204) 3D modeling data, bone data, and skin weight corresponding to the input image data and the distance data. Accessing means 43 requests (at step S205) the 3D modeling data, the bone data, and the skin weight output from machine-learning model 112 to be written in database 111. This request includes appendix data about the clothing, e.g., a clothing ID. The clothing ID is input by a user operating 3D scanner 40, for example. In server 10, storage means 11 stores in database 111 (at step S206) the 3D modeling data, the bone data, the skin weight, and the appendix data output from machine-learning model 112.

In terminal device 30, the obtaining means 33 requests (at step S206) server 10 to provide the output data in response to an instruction from the user or automatically by a program. The user of terminal device 30 may be a user different from the user who has scanned the target clothing by operating 3D scanner 40, or may be the same user. This request includes information identifying the clothing, e.g., a clothing ID. Output data refers to data indicating the 3D modeling data or a result of processing the 3D modeling data (for example, a moving image in which a 3D model is caused to perform a predetermined or instructed movement). Server 10 outputs the requested output data. For example, server 10 outputs the 3D modeling data read from database 111 to terminal device 30. The obtaining means 33 obtains (at step S207) the output data from the server 10. Output means 31 outputs (at step S208) an image using the output data. Output means 31 may output an image in which the target clothing is worn on the user's 3D model. Alternatively, output means 31 may output an image of the target clothing alone (without a user body). In a case of outputting images in which the target clothing is worn by the user, control means 32 obtains 3D modeling data of the user (an example of the third obtaining means), and performs a process of synthesizing a 3D model of the user and a 3D model of the clothing (an example of the synthesizing means). Since the bone data and the skin weight are set in the 3D modeling data of the target clothing, the clothing can be moved in accordance with the movement of the 3D model of the user. The user's 3D modeling data is stored in a database, such as database 111.

### 3. Second embodiment

Next, a second embodiment will be described. Like elements to those of the first embodiment are denoted by the same reference numerals, and detailed description thereof is omitted.

### 3-1. Configuration

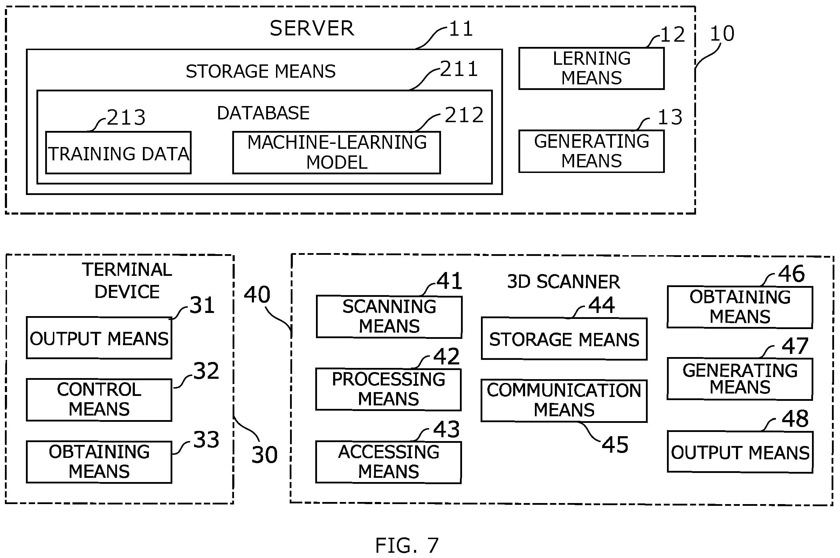

FIG. 7 shows an exemplary functional configuration of 3D data system 2 according to the second embodiment. 3D data system 2 includes storage means 11, learning means 12, scanning means 41, processing means 42, accessing means 43, storage means 44, communication means 45, generating means 47, output means 48, output means 31, control means 32, and obtaining means 33. Storage means 11 stores various data. The data stored in storage means 11 includes a database 111, a machine-learning model 212, and training data 213.

Machine-learning model 212 is a model used for machine-learning. Machine-learning model 212 includes an input layer, an intermediate layer, and an output layer. At a first point in time, machine-learning model 212 is a model that has not yet learned (i.e., has not been learned). Training data 213 includes, for each of clothing, images of the clothing, 3D modeling data of the clothing, and pattern-paper data. The pattern-paper data indicates a shape and size of a pattern paper used for making the clothing. The pattern-paper data is provided by an operator who makes the clothing. Alternatively, the pattern-paper data may be manually created by an operator of 3D data system 2 by disassembling clothing or the like.

Learning means 12 causes machine-learning model 212 to perform learning by using training data 213. Training data 213 may be added or updated at a predetermined timing, and machine-learning model 212 may be added to or learned again using added or updated training data 213.

Accessing means 43 accesses machine-learning model 212. Accessing means 43 inputs to machine-learning model 212 an image obtained by photographing the target clothing, and obtains the pattern-paper data of the target clothing (that is, accessing means 41 is an example of the first obtaining means). Output means 48 outputs to generating means 47 a request for generation of a 3D model. The request includes the pattern-paper data of the target clothing. Generating means 47 generates 3D modeling data, bone data, and a skin weight of the clothing upon provision of paper-type data of the clothing. Generating means 47 generates the pattern-paper data of the clothing, the 3D modeling data, the bone data, and the skin weight according to a predetermined algorithm. Alternatively, generating means 47 may generate the 3D modeling data, the bone data, and the skin weight using machine-learning. Here, for a plurality of clothing, the pattern-paper data, the 3D modeling data, the bone data, and the skin weight are used as training data. In this machine-learning model, the pattern paper data is provided to an input layer, and the 3D modeling data, the bone data, and the skin weight are provided to an output layer. Accessing means 43 obtains the 3D modeling data, the bone data, and the skin weight from generating means 47 (that is, accessing means 43 is an example of the second obtaining means).

### 3-2. Operation

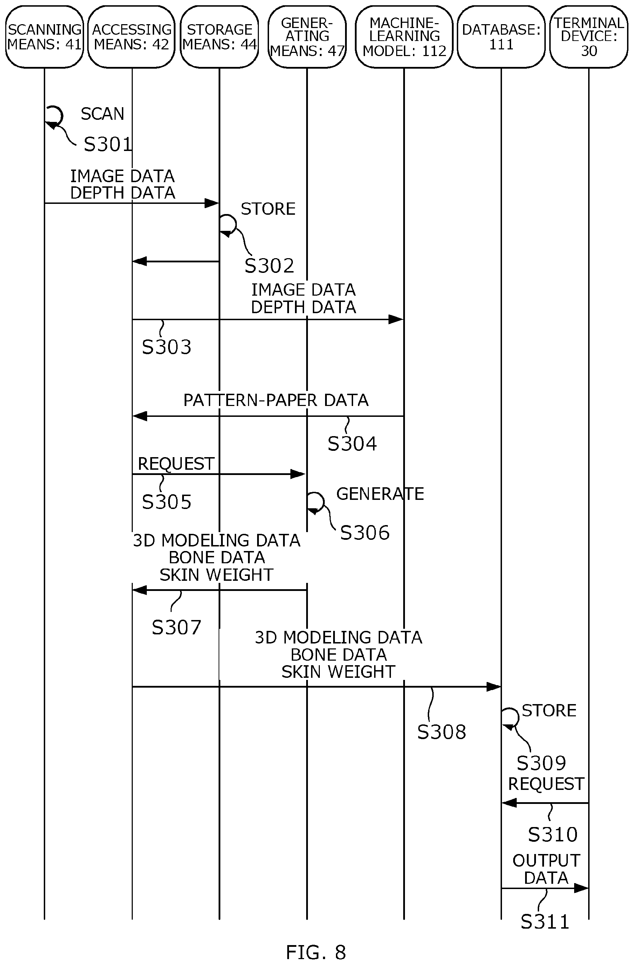

FIG. 8 shows an exemplary sequence chart illustrating a data generation process according to the second embodiment. The process in FIG. 6 is started, for example, when a predetermined start condition is satisfied. The start condition is, for example, a condition that the user instructs generation of 3D modeling data in 3D scanner 40.

At step S301, scanning means 41 scans an object, i.e., clothing. Storage means 44 stores the image data and the distance data obtained by scanning means 41 (step S302). At step S203, accessing means 43 accesses machine-learning model 212. Specifically, accessing means 43 inputs to machine-learning model 212 the image data and the distance data obtained by scanning means 41. Machine-learning model 112 outputs (at step S304) the pattern-paper data corresponding to the input image data and the distance data.

Accessing means 43 requests (at step S305) generating means 47 to generate a 3D model, which includes the pattern-paper data of the target clothing. In response to the request, generating means 47 generates (at step S306) 3D modeling data, bone data, and skin weight of the target clothing. Accessing means 43 obtains (at step S307) 3D modeling data, the bone data, and the skin weight of the target clothing generated by generating means 47. Accessing means 43 requests (at step S308) 3D modeling data, the bone data, and the skin weight of the target clothing generated by generating means 47 to be written in database 111. This request includes appendix data about the clothing, e.g., a clothing ID. The clothing ID is input by a user operating 3D scanner 40, for example. In server 10, storage means 11 stores in database 111 (at step S309) the pattern-paper data and the appendix data output from machine-learning model 212.

In terminal device 30, the obtaining means 33 requests (at step S310) server 10 to provide the output data in response to an instruction from the user or automatically by a program. Server 10 provides (at step S310) terminal device 30 with output data. Output means 31 outputs (at step S311) images using the output data. These processes are the same as those from step S206 to step S208 in the first embodiment.

### 4. Modification

The present invention is not limited to the embodiments described above, and various modifications can be applied. Some variations of a modification are described below. Two or more of the variations described in the following modification may be combined.

The device constituting 3D data system 1 and the allocation of functions to the devices are not limited to the example described in the above embodiments. For example, in the first embodiment, machine-learning model 112 may be implemented in a device different from server 10. In the second embodiment, machine-learning model 212 and generating means 47 may be implemented in different devices. In at least one of the first embodiment and the second embodiment, functions corresponding to the processing means 42, and accessing means 43 may be implemented in server 10 or in another server instead of 3D scanner 40. In this case, 3D scanner 40 only scans the target clothing and accepts the appendix data. The subsequent processes are performed by the servers. Alternatively, at least a part of the functions described as being included in the servers 10 in the embodiment may be implemented in 3D scanner 40.

3D data system 1 may change a degree of automation in accordance with a volume of training data 113. For example, in a case that a volume of training data 113 is smaller than a first threshold value and machine-learning model 112 is not learned, accessing means 43 of 3D scanner 40 accesses database 111 and searches for images similar to the scanned clothing. Similar clothing is searched, for example, using image data as a key. Additionally or alternatively, similar clothing may be searched for information contained in the appendix data, such as a brand name or a model number, as a key. In a case that similar 3D modeling data is found, 3D scanner 40 provides screens for editing the found 3D modeling data and the corresponding bone data and skin weights. The user can edit 3D modeling data of the clothing similar to the target clothing on the screen to generate 3D modeling data, bone data, and skin weight of the target clothing. This is similar to 3D data system 2. In a case that the amount of training data 113 exceeds the first threshold value,

3D scanner 40 provides screens for the user to edit the generated 3D modelling data, bone data, and skin weights for the target clothing. The user can edit 3D modelling data, the bone data, and the skin weight of the target clothing in this window. It is of note here that this processing may be performed in a case that the amount of training data 113 is larger than the first threshold value and smaller than the second threshold value in the previous variation.

Server 10 may be a physical server or a cloud-based virtual server.

The program executed by CPU 441 or the like may be downloaded via a network such as the Internet or may be provided while being recorded in a non-transitory storage medium such as a CD-ROM.

## Claims

1. A 3D data system comprising:
an accessing means for accessing a machine-learning model that learns by using training data, the training data including, for each of a plurality of clothing, (a) image data and distance data for an input layer and (b) 3D modeling data, bone data, and a skin weight of the clothing for an output layer, the image data and distance data being obtained by scanning the plurality of clothing;
an obtaining means for obtaining 3D modeling data, bone data, and a skin weight of a target clothing, by inputting image data and distance data of the target clothing into the machine-learning model; and
a storage means for storing the 3D modeling data, the bone data, and the skin weight of the target clothing.

2. A 3D data system comprising:
an accessing means for accessing a machine-learning model that learns by using training data, the training data including, for each of a plurality of clothing, (a) image data and distance data for an input layer and (b) pattern-paper data of the clothing for an output layer, the image data and distance data being obtained by scanning a plurality of clothing, the pattern-paper data being used for manufacturing a target clothing;
a first obtaining means for obtaining pattern-paper data of the target clothing by inputting image data and distance data of the target clothing into the machine-learning model;
a second obtaining means for obtaining 3D modeling data, bone data, and a skin weight of the target clothing from a 3D model generating system that outputs 3D modeling data, bone data, and a skin weight of a clothing from image data and distance data of the clothing; and
a storage means for storing the 3D modeling data, the bone data, and the skin weight of the target clothing.

3. The 3D data system according to claim 1 or 2, further comprising:
a third obtaining means for obtaining 3D modelling data of a user; and
a synthesizing means for synthesizing a 3D model showing a 3D model of the user wearing the target clothing.

4. A 3D data generating method comprising:
accessing a machine-learning model that learns by using training data, the training data including, for each of a plurality of clothing, (a) image data and distance data for an input layer and (b) 3D modeling data, bone data, and a skin weight of the clothing for an output layer, the image data and distance data being obtained by scanning a plurality of clothing;
obtaining 3D modeling data, bone data, and a skin weight of a target clothing, by inputting image data and distance data of the target clothing into the machine-learning model; and
storing the 3D modeling data, the bone data, and the skin weight of the target clothing.

5. A 3D data generating method comprising:
accessing a machine-learning model that learns by using training data, the training data including, for each of a plurality of clothing, (a) image data and distance data for an input layer and (b) pattern-paper data of the clothing for an output layer, the image data and distance data being obtained by scanning a plurality of clothing, the pattern-paper data being used for manufacturing the target clothing;
obtaining pattern-paper data of a target clothing by inputting image data and distance data of the target clothing into the machine-learning model;
obtaining 3D modeling data, bone data, and a skin weight of a target clothing from a 3D model generating system that outputs 3D modeling data, bone data, and a skin weight of a clothing from image data and distance data of the clothing; and
storing the 3D modeling data, the bone data, and the skin weight of the target clothing.
